# EUROPÄISCHE PATENTSCHRIFT

(11) **EP 1 263 294 B1**
(45) Veröffentlichungstag und Bekanntmachung des Hinweises auf die Patenterteilung: **25.01.2006**
(21) Anmeldenummer: 01927722.7
(22) Anmeldetag: 13.03.2001
(51) Int. Cl.: A22C 11/10

(54) **VORRICHTUNG ZUM ABTRENNEN VON WÜRSTEN VON EINEM WURSTSTRANG**
DEVICE FOR SEPARATING SAUSAGES FROM A STRING OF SAUSAGES
DISPOSITIF POUR SEPARER DES SAUCISSES D'UN BOYAU A SAUCISSES

(30) Priorität: 14.03.2000 DE 10012149
(43) Veröffentlichungstag der Anmeldung: 11.12.2002
(73) Patentinhaber: Stimpfl, Christof, 88267 Vogt (DE)
(72) Erfinder: Stimpfl, Christof, 88267 Vogt (DE)
(74) Vertreter: Weiss, Peter
(86) Internationale Anmeldenummer: PCT/EP2001/002766
(87) Internationale Veröffentlichungsnummer: WO 2001/067875

(56) Entgegenhaltungen:
- EP-A- 0 009 770
- FR-A- 2 691 878
- GB-A- 2 076 629
- US-A- 4 214 492

## Beschreibung

Die Erfindung betrifft eine Vorrichtung zum Antrennen von Würsten von einem Wurststrang, an dem die Würste über eine Abdrehstelle verbunden sind, an der sich zumindest ein Clip befindet, sowie ein Verfahren hierfür.

Aus der DE 43 18 301 C2 ist beispielsweise ein Verfahren und eine Vorrichtung der obengenannten Art bekannt, bei dem die Würste von Transportelementen zu einer Schneidstelle transportiert und dort durch ein Schneidelement vom Wurststrang abgetrennt werden. Vor dieser Schneidstelle wird eine Abdrehstelle zwischen zwei Würsten mittels eines Sensors ermittelt, wobei der Sensor einen Spannungsabfall und einen Spannungsanstieg an der Abdrehstelle und daraus ein Bild (Kontur) der Abdrehstelle zwischen den Würsten ermittelt. Hierdurch und durch die Geschwindigkeit der Transportelemente wird der Zeitpunkt der Tätigkeit der Schneidelemente an der Schneidstelle bestimmt. Bei dem Schneidelement handelt es sich um ein sichelförmiges Messer, welches von einem Servomotor angetrieben wird.

Der vorliegenden Erfindung liegt die Aufgabe zugrunde, eine Vorrichtung der oben genannten Art derart zu verbessern, dass ein möglichst schonendes Durchtrennen einer Abdrehstelle und insbesondere das Entfernen eines dort vorgesehenen Clips ermöglicht wird.

Zur Lösung dieser Aufgabe führt, dass ein Messer mit seiner Schneide vor und/oder nach dem Clip schneidend um die Abdrehstelle dreht.

Entsprechend dem erfindungsgemässen Verfahren wird ein Messer gegen die Abdrehstelle bewegt, sodass die Schneide der Abdrehstelle schneidend anliegt, wobei dann das Messer um die Abdrehstelle gedreht und dabei die Abdrehstelle durchtrennt wird. Der Vorteil dieses Verfahrens ist, dass ein Durchtrennen der Abdrehstelle wesentlich schonender erfolgt, da die Abdrehstelle nicht mit dem Messer durchschlagen, sondern geschnitten wird.

Bevorzugt weist das Messer zumindest zwei Flügel auf, die in Transportrichtung der Wurst hintereinander angeordnet sind. Diese Ausgestaltung des Messers macht es möglich, dass zwischen die beiden Flügel ein oder mehrere Clipse aufgenommen werden können, welche dann zusammen mit dem entsprechenden Teil der Abdrehstelle entfernt werden.

Um ein Drehen des Messers möglich zu machen, soll dieses bevorzugt an einem Drehring angeordnet sein. Das Messer befindet sich dabei innerhalb des Drehringes, wobei die Schneiden des Messers bzw. der Flügel bevorzugt etwas über den Mittelpunkt des Drehringes hinausragen. Gegenüber dem Drehring ist das Messer in etwa radial angeordnet.

Gedreht wird der Drehring mittels eines Servomotors. Damit macht sich die Erfindung die bekannten Vorteile des Servomotors zunutze. Ferner soll dieser Drehring in der Vertikalen bewegbar sein. Das bedeutet, dass mit dem Drehring auch das Messer und damit die Schneiden an die Abdrehstelle herangeführt werden, wobei die Schneiden nach Ende der Bewegung in der Vertikalen auch etwas in die Abdrehstelle eindringen sollen oder zumindest die Abdrehstelle etwas unter Druck setzen.

Ferner ist der Drehring an einem Tragring angeordnet. Gegenüber diesem Tragring soll der Drehring drehbar sein, sodass zwischen Tragring und Drehring entsprechend Lager, insbesondere Kugellager vorgesehen werden.

Gedreht wird der Drehring gegenüber dem Tragring mittels des oben erwähnten Servomotors, wobei dieser über ein entsprechendes Antriebsritzel und ein Antriebselement insbesondere eine Antriebskette mit dem Drehring verbunden ist. Der Tragring weist im übrigen einen entsprechenden Lagerwinkel auf, an dem der Servomotor festliegt. Zum Bewegen des Tragringes in der Vertikalen sind viele Möglichkeiten denkbar. Nur beispielhaft können dem Tragring Zahnstangen angeformt sein, wobei in entsprechende Zahnungen Zahnritzel eingreifen, die über ein Getriebe mit einem Antrieb, insbesondere ebenfalls einem Servomotor, verbunden sind.

Hervorzuheben ist, dass beim Drehen der Messerflügel um die Abdrehstelle herum ein Abschneiden der Abdrehstelle und insbesondere der Clipse erfolgt, wobei im übrigen einem seitlichen Ausweichen der Würste die in den DE 43 18 301 C2 gezeigten Transportelemente für den Wurststrang entgegenwirken.

Weitere Vorteile, Merkmale und Einzelheiten der Erfindungen ergeben sich aus der nachfolgenden Beschreibung bevorzugter Ausführungsbeispiele sowie anhand der Zeichnung; diese zeigt in
Figur 1 eine schematisiert dargestellte Seitenansicht von Teilen einer Vorrichtung zum Abtrennen von Würsten von einem Wurststrang;
Figur 2 eine Frontansicht der Vorrichtungsteile gemäss Figur 1;
Figur 3 und Figur 4 Frontansicht der Teile der Vorrichtung gemäss Figur 1 in unterschiedlichen Gebrauchslagen.

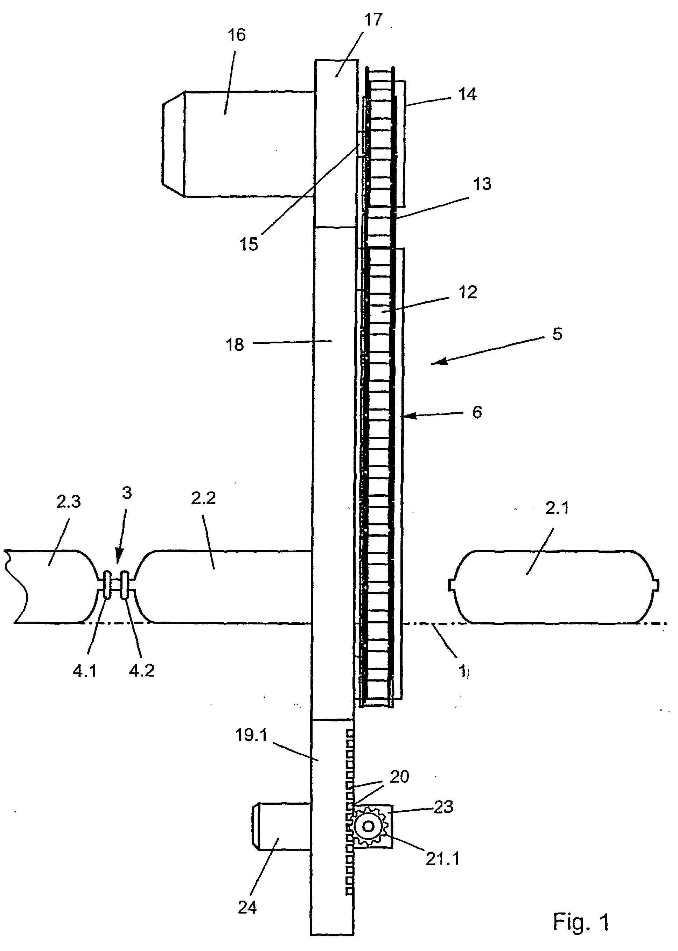

Gemäss Figur 1 liegen auf einer, hier strichpunktiert angedeuteten Maschinenebene 1 Würste 2.1, 2.2 und 2.3 auf, wobei die Wurst 2.1 bereits vom Wurststrang abgetrennt ist, während die Würste 2.2 und 2.3 noch an einer Abdrehstelle 3 miteinander verbunden sind. Die Verbindung wird durch zwei Clipse 4.1 und 4.2 unterstützt.

Nicht näher gezeigt sind entsprechende Transportelemente für den Wurststrang sowie eine Erkennungseinrichtung für die Abdrehstelle. Hierzu soll auf die DE 43 18 301 C2 verwiesen werden.

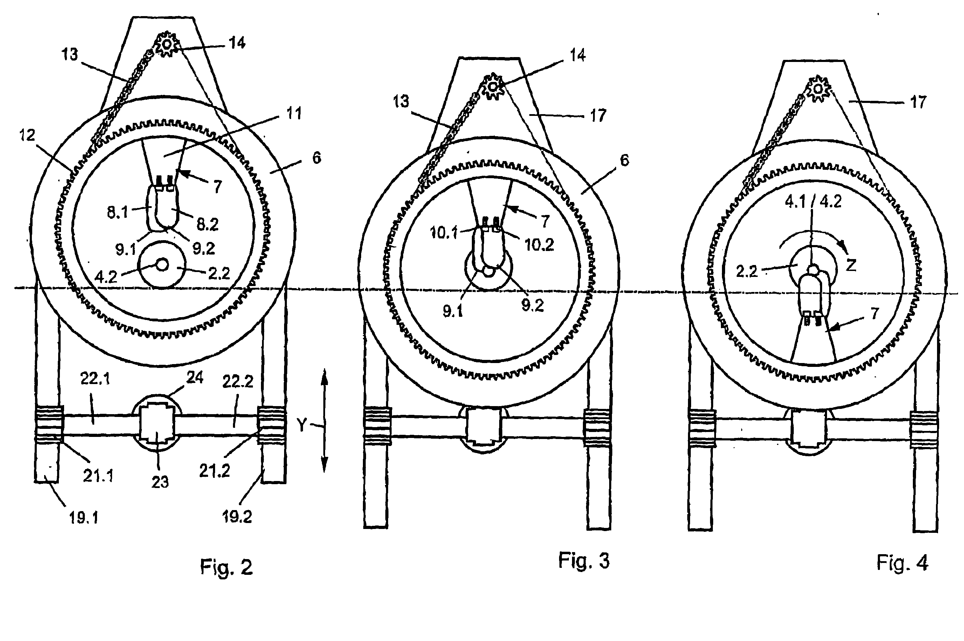

Eine Abtrennstelle 5 für die Wurst 2.1 von der Wurst 2.2 weist einen Drehring 6 auf, in dem sich ein Messer 7 (Figur 2 bis Figur 4) befindet. Dieses Messer 7 besitzt zwei Flügel 8.1 und 8.2, welche in Transportrichtung x der Würste hintereinander angeordnet sind. Jeder Flügel 8.1 bzw. 8.2 weist eine Schneide 9.1 bzw. 9.1 auf. Das Messer selbst kann beispielsweise aus einem Metallband bestehen, welches gekrümmt ist, wobei beide Enden die Schneiden 9.1 und 9.2 aufweisen. Bevorzugt sind diese Schneiden 9.1 und 9.2 konkav nach aussen gekrümmt.

Das Messer 7 ist über Befestigungselemente 10.1 und 10.2 mit einem Halter 11 verbunden. Dieser Halter 11 sitzt in dem Drehring 6 und kann mit diesem Drehring 6 in Richtung z gedreht werden. Der Drehring 6 weisst eine Aussenzahnung 12 auf, in die eine Kette 13 eingreift. Die Kette 13 steht mit einem Antriebsritzel 14 in Verbindung, welches auf einer Drehwelle 15 eines Antriebsmotors 16 aufsitzt. Bevorzugt handelt es sich bei dem Antriebsmotor um einen Servomotor.

Der Antriebsmotor 16 liegt an einem Lagerwinkel 17 fest. Der Lagerwinkel 17 sitzt auf einem Tragring 18 auf, an dem auch der Drehring 6 über nicht näher gezeigte Lager, beispielsweise Kugellager, angeordnet ist, wobei der Drehring 6 gegenüber dem Tragring 18 in Drehrichtung z gedreht werden kann.

Nach unten ragen von dem Tragring 18 zwei Zahnstangen 19.1 und 19.2 ab, deren Zahnung 20 jeweils mit einem entsprechenden Zahnritzel 21.1 bzw. 21.2 in Eingriff steht. Die Zahnritzel 21.1 und 21.2 stehen über jeweils einen Achsstummel 22.1 und 22.2 mit einem Getriebe 23, bevorzugt einem Schneckenradgetriebe, in Verbindung. Diesem Getriebe 23 ist wiederum ein Antrieb 24 zugeordnet, über den das Getriebe 23, die Achsstummel 22.1, 22.2 sowie die Zahnritzel 21.1 und 21.2 in Bewegung gesetzt werden können. Das Getriebe 23 übersetzt die Bewegung so, dass die Zahnritzel 21.1, 21.2 in entgegengesetzter Richtung angetrieben werden, sodass eine Bewegung der gesamten Abtrennstelle 5 in Richtung des Doppelpfeiles y durchgeführt werden kann.

Die Funktionsweise der vorliegenden Erfindung ist folgende und wird anhand der Figuren 2 bis 4 näher erläutert:

Eine Wurst 2.2 gelangt in die Abtrennstelle 5, wie dies in Figur 2 angedeutet ist. Vorher wurde beispielsweise entsprechend der DE 43 18 301 C2 die Lage der Abtrennstelle und auch die Lage des oder der Clipse genau ermittelt.

Innerhalb der Abtrennstelle 5 wird die Wurst 2.2 unter dem Messer 7 angehalten und zwar exakt an der Stelle, an der die Flügel 8.1 und 8.2 den bzw. die Clipse zwischen sich aufnehmen können. Nunmehr wird der Antrieb 24, der ebenfalls ein Servomotor ist, in Tätigkeit gesetzt. Die Zahnritzel 21.1 und 21.2 laufen die Zahnstangen 19.1 und 19.2 ab, wobei die Trennstelle 5 in Richtung y nach unten bewegt wird. Das Messer 7 trifft gemäss Figur 3 mit seinen Schneiden 9.1 und 9.2 auf die Abdrehstelle 3 und zwar vor und hinter dem bzw. den Clipsen. Bevorzugt dringen dabei die Schneiden 9.1 und 9.2 bereits in die Abdrehstelle 3 ein.

Nunmehr wird der Servomotor 16 in Tätigkeit versetzt, der über die Drehwelle 15, das Antriebsritzel 14 und die Kette den Drehring 6 in Bewegung versetzt. Das Messer 7 dreht nun, wie in Figur 4 gezeigt, um die Abdrehstelle und trennt die beiden Würste 2.1 und 2.2 voneinander, wobei gleichzeitig der Clip 4.1/4.2 entfernt wird. Bei der Drehung gelangt das Messer dann wieder in die Ausgangslage gemäss Figur 2 zurück.

Da die Flügel 8.1 und 8.2 schwalbenschwanz-ähnlich schräg angestellt sind, schält das Messer 7 quasi die Abdrehstelle 3 mit dem Clip 4.1/4.2 von den Würsten 2.1 bzw. 2.2 ab. Dabei wird vermieden, dass die Wursthaut einreisst.

### Positionszahlenliste

| | | | | | |
|---|---|---|---|---|---|
| 1 | Maschinenebene | 34 | | 67 | |
| 2 | Wurst | 35 | | 68 | |
| 3 | Abdrehstelle | 36 | | 69 | |
| 4 | Clip | 37 | | 70 | |
| 5 | Abtrennstelle | 38 | | 71 | |
| 6 | Drehring | 39 | | 72 | |
| 7 | Messer | 40 | | 73 | |
| 8 | Flügel | 41 | | 74 | |
| 9 | Schneide | 42 | | 75 | |
| 10 | Befestigungselement | 43 | | 76 | |
| 11 | Halter | 44 | | 77 | |
| 12 | Aussenzahnung | 45 | | 78 | |
| 13 | Kette | 46 | | 79 | |
| 14 | Antriebsritzel | 47 | | | |
| 15 | Drehwelle | 48 | | | |
| 16 | Antriebsmotor | 49 | | | |
| 17 | Lagerwinkel | 50 | | | |
| 18 | Tragring | 51 | | | |
| 19 | Zahnstangen | 52 | | | |
| 20 | Zahnung | 53 | | | |
| 21 | Zahnritzel | 54 | | | |
| 22 | Achsstummel | 55 | | | |
| 23 | Getriebe | 56 | | | |
| 24 | Antrieb | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | x | Transportrichtung |
| 32 | | 65 | | y | Hubrichtung |
| 33 | | 66 | | z | Drehrichtung |

## Patentansprüche

1. Vorrichtung zum Abtrennen von Würsten (2.1, 2.2, 2.3) von einem Wurststrang, an dem die Würste über eine Abdrehstelle (3) verbunden sind, an der sich zumindest ein Clip (4.1, 4.2) befindet,
**dadurch gekennzeichnet,**
**dass** ein Messer (7) mit seiner Schneide (9.1, 9.2) vor und/oder nach dem Clip (4.1, 4.2) schneidend um die Abdrehstelle (3) drehbar ist.

2. Vorrichtung nach Anspruch 1, **dadurch gekennzeichnet, dass** das Messer (7) zumindest zwei Flügel (8.1, 8.2) aufweist, die in Transportrichtung (x) der Wurst (2.1, 2.2, 2.3) hintereinander angeordnet sind.

3. Vorrichtung nach Anspruch 1 oder 2, **dadurch gekennzeichnet, dass** das Messer (7) an einem Drehring (6) angeordnet ist.

4. Vorrichtung nach Anspruch 3, **dadurch gekennzeichnet, dass** dem Drehring (6) ein Servomotor (16) zugeordnet ist.

5. Vorrichtung nach Anspruch 3 oder 4, **dadurch gekennzeichnet, dass** der Drehring (6) in der Vertikalen (y) bewegbar ist.

6. Vorrichtung nach Anspruch 5, **dadurch gekennzeichnet, dass** der Drehring (6) an einem Tragring (18) angeordnet ist.

7. Vorrichtung nach Anspruch 6, **dadurch gekennzeichnet, dass** der Servomotor (16) auf dem Tragring (18) aufsitzt und über ein Antriebselement (13) mit dem Drehring (6) verbunden ist.

8. Vorrichtung nach einem der Ansprüche 6 oder 7, **dadurch gekennzeichnet, dass** an dem Tragring (18) zumindest eine Zahnstange (19.1, 19.2) angeordnet und dieser ein Zahnritzel (21.1, 21.2) zugeordnet ist, welches mit einem Antrieb (24) gegebenenfalls über ein Getriebe (23) verbunden ist.

9. Verfahren zum Abtrennen von Würsten (2.1, 2.2, 2.3) von einem Wurststrang, an dem die Würste über eine Abdrehstelle (3) verbunden sind, an der sich zumindest ein Clip (4.1, 4.2) befindet, **dadurch gekennzeichnet, dass** ein Messer (7) gegen die Abdrehstelle (3) bewegt wird, so dass die Schneide (9.1, 9.2) des Messers (7) der Abdrehstelle (3) schneidend anliegt, wobei dann das Messer (7) um die Abdrehstelle (3) gedreht und dabei die Abdrehstelle (3) durchtrennt wird.

## Claims

1. Apparatus for separating sausages (2.1, 2.2, 2.3) from a string of sausages, where the sausages are connected via a twist point (3), at which twist point there is at least one clip (4.1, 4.2), **characterised in that** a cutter, (7) cutting with its cutting edge (9.1, 9.2) before and/or after the clip (4.1,4.2), is rotatable about the twist point (3).

2. Apparatus according to claim 1, **characterised in that** the cutter (7) has at least two blades (8.1, 8.2), which are disposed one behind the other when viewed with respect to the direction of conveyance (x) of the sausage (2.1, 2.2, 2.3).

3. Apparatus according to claim 1 or 2, **characterised in that** the cutter (7) is disposed on a rotary ring (6).

4. Apparatus according to claim 3, **characterised in that** a servomotor (16) is associated with the rotary ring (6).

5. Apparatus according to claim 3 or 4, **characterised in that** the rotary ring (6) is displaceable in the vertical direction (y).

6. Apparatus according to claim 5, **characterised in that** the rotary ring (6) is disposed on a supporting ring (18).

7. Apparatus according to claim 6, **characterised in that** the servomotor (16) sits on the supporting ring (18) and is connected to the rotary ring (6) via a driving element (13).

8. Apparatus according to one of claims 6 or 7, **characterised in that** at least one gear rack (19.1, 19.2) is disposed on the supporting ring (18), and a pinion (21.1, 21.2), which is connected to a drive (24) possibly via a gear unit (23), is associated with said gear rack.

9. Method of separating sausages (2.1, 2.2, 2.3) from a string of sausages, where the sausages are connected via a twist point (3), at which there is at least one clip (4.1, 4.2), **characterised in that** a cutter (7) is displaced towards the twist point (3), so that the cutting edge (9.1, 9.2) of the cutter (7) abuts against the twist point (3) in a cutting manner, the cutter (7) then being rotated about the twist point (3), and the twist point (3) thereby being severed.

## Revendications

1. Dispositif pour séparer des saucisses (2.1, 2.2, 2.3) d'un boyau à saucisses où les saucisses sont reliées entre elles par l'intermédiaire d'un point rotatif de séparation (3) auquel se trouve au moins un clip (4.1, 4.2),
**caractérisé par le fait**
**qu'**une lame (7) avec un tranchant {9.1, 9.2) peut tourner en coupant autour du point rotatif de séparation (3), avant et/ou après le clip (4.1, 4.2).

2. Dispositif selon la revendication 1, **caractérisé par le fait que** la lame (7) présente au moins deux ailes (8.1, 8.2) qui sont disposées l'une après l'autre dans la direction de transport (x) de la saucisse (2,1, 2,2, 2.3).

3. Dispositif selon la revendication 1 ou 2, **caractérisé par le fait que** la lame (7) est disposée sur une bague rotative (6).

4. Dispositif selon la revendication 3, **caractérisé par le fait qu'**à la bague rotative (6) est associé un servomoteur (16).

5. Dispositif selon la revendication 3 ou 4, **caractérisé par le fait que** la bague rotative (6) est déplaçable dans le sens vertical (y).

6. Dispositif selon la revendication 5, **caractérisé par le fait que** la bague rotative (6) est disposée sur une bague de support (18).

7. Dispositif selon la revendication 6, **caractérisé par le fait que** le servomoteur (16) est placé sur la bague de support (18) et est relié, par l'intermédiaire d'un élément d'entraînement (13), à la bague rotative (6).

8. Dispositif selon l'une des revendications 6 ou 7, **caractérisé par le fait que** sur la bague de support (18) est disposée au moins une tige dentée (19.1, 19.2) et qu'à cette dernière est associé un pignon (21.1, 21.2) qui est relié à un entraînement (24), éventuellement par l'intermédiaire d'un engrenage (23).

9. Procédé pour séparer des saucisses (2.1, 2.2, 2,3) d'un boyau à saucisses où les saucisses sont reliées entre elles par l'intermédiaire d'un point rotatif de séparation (3) auquel se trouve au moins un clip (4.1, 4.2), **caractérisé par le fait qu'**une lame (7) est déplacée contre le point rotatif de séparation (3), de sorte que le tranchant (9.1, 9.2) de la lame (7) se trouve de manière coupante contre le point rotatif de séparation (3), la lame (7) étant alors tournée autour du point rotatif de séparation (3) et le point rotatif de séparation (3) étant ainsi coupé.
